Europäisches Patentamt

European Patent Office

Office européen des brevets

(19)

(11) Publication number: **0 164 875**

**A2**

(12) # EUROPEAN PATENT APPLICATION

(21) Application number: **85303151.6**

(22) Date of filing: **02.05.85**

(51) Int. Cl.⁴: **G 02 B 21/18**

(30) Priority: **15.05.84 DE 3418024**

(43) Date of publication of application:
**18.12.85 Bulletin 85/51**

(84) Designated Contracting States:
**AT FR GB**

(71) Applicant: **C. Reichert Optische Werke AG**
**P.O. Box 95 Hernalser Hauptstrasse 219**
**A-1170 Vienna(AT)**

(72) Inventor: **Schindl, Klaus**
**Amalienstrasse 34/I/3**
**A-1130 Vienna(AT)**

(72) Inventor: **Puxkandl, Peter**
**Neugasse 23**
**A-2511 Pfaffstatten(AT)**

(74) Representative: **Coxon, Philip**
**Eric Potter & Clarkson 14 Oxford Street**
**Nottingham NG1 5BP(GB)**

(54) Microscope.

(57) A microscope (60) comprises an objective lens (10) having an optical axis (12), an eyepiece tube (66), first auxiliary means (74) and second auxiliary means (32). The first and second auxiliary means (74, 32) receive an image from the objective (10) along first and second beam paths (68, 70, 72, 36 and 38) respectively. The beam paths are arranged to intersect so that both the first and second auxiliary means (74, 32) can be arranged in an ergonomically favourable manner.

EP 0 164 875 A2

## MICROSCOPE

This invention relates to a microscope, and in particular to an upright microscope having an objective lens and auxiliary means.

A microscope of this type is known as Polyvar, and is distributed by Messrs. Reichert-Jung, Vienna. In this microscope auxiliary means comprising a projection screen may be arranged vertically above the eyepieces, so that the microscope user can easily change from observing an object through the eyepieces to observing the object on the projection screen. The projection screen can be replaced by a large format camera, when the operator can easily operate the camera. In this known microscope the auxiliary means is, from an ergonomic point of view, ideally arranged. However, this commercially available microscope does not permit further auxiliary means, such as a television camera, to be connected in addition to the large format camera or the projection screen.

There are many other commercially available microscopes which permit the simultaneous connection of two items of auxiliary means, for example a large format camera and a television camera. However, such known microscopes are ergonomically unsatisfactory, since at least one of the auxiliary means, if not both, is difficult to operate from a normal sitting position in front of the microscope.

One known microscope includes both a projection screen and a large format camera. The projection screen is arranged in an optimum manner as described above, but the large format camera is located to the rear of the microscope and extends laterally outwards, so that changing the film is complicated and difficult to perform.

In another recently available microscope, a forwardly extending large format camera and television screen are provided. The large format camera is arranged behind the television camera, so that it is practically impossible to operate the large format camera when the television camera is in use.

There are many other ergonomically unsatisfactory arrangements.

It is an object of the present invention to provide a microscope with which at least two auxiliary means can be used so that, when both auxiliary items are simultaneously in use, they can both be operated in a manner which is ergonomically satisfactory and which does not obstruct their operation.

According to the present invention there is provided a microscope comprising an objective lens having an optical axis, first auxiliary means receiving an image from said objective along a first beam path, second auxiliary means receiving an image from said objective along a second beam path, wherein said first and second beam paths are arranged to intersect.

Advantageously the microscope further comprises an eyepiece tube, and the first auxiliary means is disposed above the eyepiece tube.

Preferably the microscope comprises deflecting means adapted to deflect a beam out of the optical axis along the first beam path to the first auxiliary means, and preferably also said second beam path intersects the first beam path between the deflecting means and the first auxiliary means.

Preferably the deflecting means comprises at least first and second reflecting surfaces, and said second reflecting surface is adapted to deflect the beam to the first auxiliary means.

Desirably the second beam path intersects the first beam path between the second reflecting surface and the first auxiliary means.

Preferably the first reflecting surface is adapted to deflect the beam out of the optical axis of the objective to the second reflecting surface.

Additional reflecting surfaces may be provided in the first beam path between the first and second reflecting surfaces.

The first auxiliary means may be a large format camera or a projection screen. The second auxiliary means may be a television camera or a microphotographic camera.

The intersection of the second and first beam path has always been avoided in the past, probably due to a prejudice in the art, and has resulted in the ergonomically unsatisfactory nature of known microscopes with two auxiliary means.

In accordance with the present invention, in which the first and second beam paths intersect, it is possible to arrange the two auxiliary means one above the other in a common vertical plane. In this way optimum operating conditions for each item are ensured, even when both items are used simultaneously. Ergonomically, this is an ideal solution.

Reference is now made to the accompanying drawings, in which:-

Figure 1 shows diagramatically one embodiment of a microscope according to the invention;

Figure 2 shows diagrammatically part of the microscope of Figure 1 on a larger scale; and

Figure 3 shows diagramatically another embodiment of a microscope in accordance with the invention.

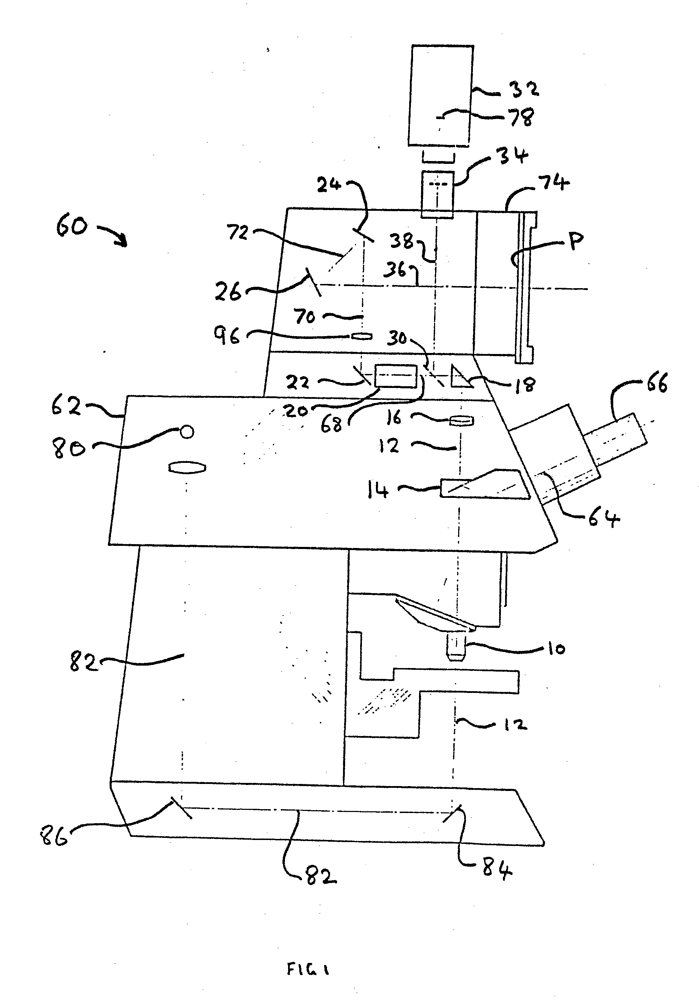

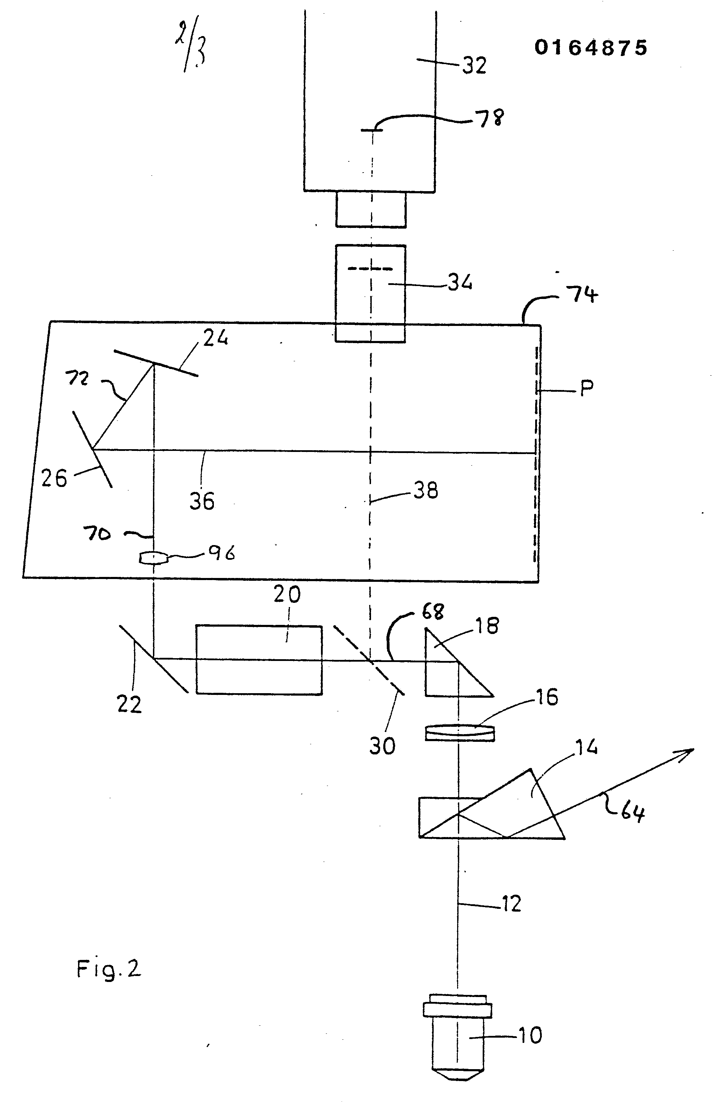

In Figures 1 and 2 an upright microscope generally designated 60 has a housing 62.

An objective 10 has a substantially vertical optical axis 12, and a deviating prism 14 is located in the optical axis 12 above the objective 10.

A beam path 64 extends from the deviating prism 14 to a microscope eyepiece 66.

A lens 16 and a prism 18 are disposed above the objective 10 in the optical axis 12. A beam path extends colinear with the optical axis 12 from the objective 10 to the prism 18.

The microscope 16 includes deflecting means comprising the prism 18, a mirror 22, a mirror 24 and a mirror 26.

A beam path 68 extends from the prism 18, substantially perpendicular to the optical axis 12, to the mirror 22. A beam path 70 extends from the mirror 22, substantially parallel to the optical axis 12, to the mirror 24; and a beam path 72 extends from the mirror 24 to the mirror 26. A beam path 36 extends from the mirror 26 to first auxiliary means 74. The first auxiliary means 74 may be a projection screen in which case the plane designated P is a projection screen plane, or may be a large format camera in which case the plane P is a film plane.

The beam path 68, 70, 72 and 36 comprise a first beam path extending from the optical axis 12 to the first auxiliary means 74.

The prism 18 provides a first reflecting surface for reflecting a beam out of the optical axis 12 along the first beam path, and the mirror 26 provides a second reflecting surface for reflecting a beam along the beam path 36 to the plane P.

The features of the microscope 60 in Figures 1 and 2 so far described are known from Reichert-Jung's Polyvar microscope, described above.

A mirror 30 is slidable into and out of the beam path 68. A second beam path 38 extends between the mirror 30 (when it is in the beam path 68) and second auxiliary means 32 arranged above the first auxiliary means 74. The second auxiliary means 32 comprises a television camera and the second beam path 38 extends to a target 78 of the television camera through an eyepiece 34 of the television camera. If desired the television camera 32 may be replaced with a microphotographic camera, or with a target for an automatic focussing device.

An optical element 20 is disposed in the beam path 68 between mirror 22 and the mirror 30. The optical element 20 may be a photo eyepiece. A photo-objective lens 96 is disposed in the beam path 70 between the mirror 22 and the mirror 24.

A light source PO is provided in the microscope housing 62 towards the rear of the microscope 60. A light source beam path 82 extends from the light source 80 to a mirror 84 disposed in the optical axis 12. A mirror 86 is disposed in the beam path 82 between the light source 80 and the mirror 84.

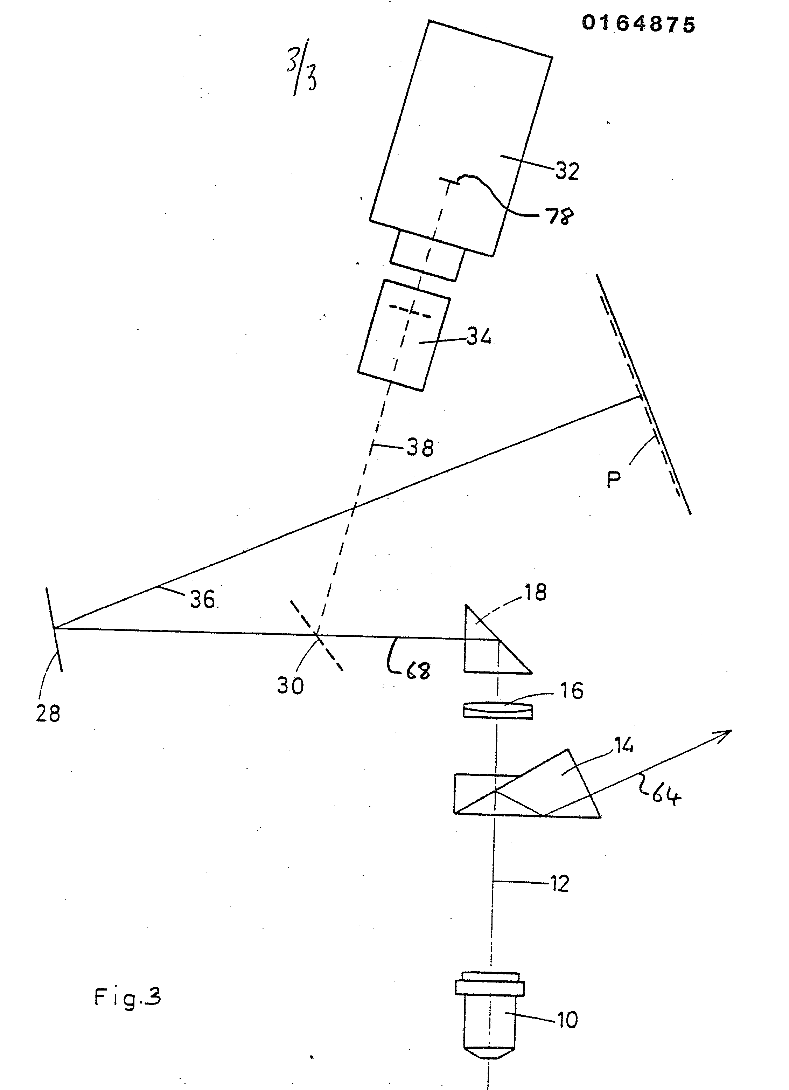

The embodiment shown in Figure 3 is similar to the embodiment shown in Figures 1 and 2 and accordingly like parts have been designated with like reference numerals.

In Figure 3 the beam path 68 extends to a mirror 28, and the beam path 36 extends between the mirror 28 and the first auxiliary device 74. In the embodiment shown in Figure 3 the first beam path comprises the beam paths 68 and 36 only. The deflecting means comprises the prism 18 and the mirror 28.

It can be seen from Figure 3 that the plane P and the second auxiliary means 32 are arranged inclined at an angle to the vertical. It can also be seen from Figures 1 to 3 that manipulation of the first auxiliary means 74 can be performed very easily because it is arranged above the eyepiece tube 66 and facing the observer like the eyepiece tube. Furthermore the orientation of the image produced on the plane P is correct. In Figure 3 the mirror 30 deflects the beam along the second beam path obliquely upwards, rather than vertically upwards as in Figures 1 and 2.

It is clear from Figures 1 to 3 that the first beam path includes a portion extending towards the rear of the microscope 60. Furthermore the first beam path intersects the second beam path between the second reflecting surface (mirror 26 in Figures 1 and 2 and mirror 28 in Figure 3) and the first auxiliary means 74; this enables the first and second auxiliary means 74 and 32 to be arranged in an ergonomically favourable manner above the eyepiece tube 66, so that both of the auxiliary means are easy to operate.

The slidable mirror 30 may be replaced by a stationary dividing mirror so that an image can be observed both on the plane P, and a television recording of the image can be made simulaneously. There is no interference between the mutually intersecting light paths.

CLAIMS

1.   A microcrope characterised by an objective lens having an optical axis, first auxiliary means receiving an image from said objective along a first beam path, second auxiliary means receiving an image from said objective along a second beam path, wherein said first and second beam paths are arranged to intersect.

2.   A microscope according to Claim 1 characterised by an eyepiece tube, and wherein the first auxiliary means is disposed above the eyepiece tube.

3.   A microscope according to Claim 1 or 2, characterised by deflecting means adapted to deflect a beam out of the optical axis along the first beam path to the first auxiliary means, and wherein said second beam path intersects the first beam path between the deflecting means and the first auxiliary means.

4.   A microscope according to Claim 3 characterised in that the deflecting means comprises at least first and second reflecting surfaces, and said second reflecting surface is adapted to deflect the beam to the first auxiliary means.

5.   A microscope according to Claim 4 characterised in that the second beam path intersects the first beam path between the second reflecting surface and the first auxiliary means.

6.   A microscope according to Claim 5 characterised in that the first reflecting surface is adapted to deflect the beam out of the optical axis of the objective to the second reflecting surface.

7.   A microscope according to Claim 5 or 6, characterised in that the first reflecting surface is adapted to deflect the beam in a direction substantially transverse to the optical axis.

8.   A microscope according to Claim 5, 6 or 7, characterised in that a third reflecting surface is provided to deflect the beam along the second beam path.

9.    A microscope according to Claim 8 characterised in that the third reflecting surface is disposed in the first beam path between the first and second reflecting surfaces.

10.   A microscope according to any preceding claim, characterised in that the first auxiliary means has an axis which is arranged substantially vertically or inclined to the vertical.

11.   A microscope according to Claim 1 in which the first auxiliary means comprises a projection screen, or a large format camera, and the second auxiliary means comprises a television camera or a microphotographic camera.

FIG 1

Fig.2

Fig.3